# EUROPEAN PATENT SPECIFICATION

(11) **EP 2 202 935 B1**
(45) Date of publication and mention of the grant of the patent: **20.06.2012**
(21) Application number: 08106030.3
(22) Date of filing: 23.12.2008
(51) Int. Cl.: H04L 29/06

(54) **Method and device for processing data in a network**
Verfahren und Vorrichtung zur Verarbeitung von Daten in einem Netzwerk
Procédé et dispositif pour le traitement de données dans un réseau

(43) Date of publication of application: 30.06.2010
(73) Proprietor: Nokia Siemens Networks OY, 02610 Espoo (FI)
(72) Inventor: Hietala, Erkki, 02320, Espoo (FI)
(74) Representative: Bruglachner, Thomas E.

(56) References cited:
- EP-A- 1 161 049
- EP-A- 1 755 314
- US-A1- 2006 112 174
- US-A1- 2008 306 815

## Description

The invention relates to a method and to a device for processing data in a network.

Deep Packet Inspection (DPI) is a form of computer network packet filtering that examines the data and/or header part of a packet as it passes an inspection point, searching for protocol non-compliance, viruses, spam, intrusions or predefined criteria to decide if the packet can pass or if it needs to be routed to a different destination, or for the purpose of collecting statistical information. Deep Packet Inspection (and filtering) enables advanced security functions as well as internet data mining, eavesdropping, and censorship.

A user surfing through the Internet may experience unavailability of a particular service, site or network component, e.g. server, wherein the user is not aware of any reason as why the service requested is not available or denied. A reason may be a broken server or a server that has been moved to a different site or link.

Patent applications EP 1161049-A (KAUFMANN O), US 2008/306815-A1 (DYKES R ET AL) and US 2006/112174-A1(L'HEUREUX I ET AL) disclose methods where a gateway or transparent proxy adds additional infomation for the user in case that a denial of a request response is received from a server.

The problem to be solved is to overcome the disadvantage stated before and in particular to provide an efficient approach to let a user experience a reason for a denial of a request.

This problem is solved according to the features of the independent claims. Further embodiments result from the depending claims.

According to an embodiment, the method comprises a step (a1):
a gateway modifies a communication from a first network component to a second network component by indicating a reason for a service change and/or by indicating a change of the service.

Hence, a user via a second network component (client device) requesting a service from the first network component or from the network in general is informed about the reason as why the service is changed, in particular that the service is no longer reachable from this first network component. In addition, the client device (second network component) can be informed about the change of the service, in particular it may obtain an information as how to access the service required from a different location.

Eventually, the client device (second network component) and thus the user may be able to access the requested service from the network component that actually provides such service. The gateway may in particular forward information that can be used to access the correct network component.

The service requested may comprise any kind of service that can be provided by the network, in particular by a component or resource of a network, in particular of the Internet. Such service may be, e.g., an information, a site, a page, a program, a link (URL) or any other kind of content information.

Advantageously, protocols of the first network component as well as of the second network component do not have to be amended or changed and the second network component (e.g., the client) may still become aware of a relocation of a service or content accessible, e.g., via a different server. This different server may be accessible by information provided by the gateway to the second network component (e.g., to the client).
According to the present invention, the gateway performs deep packet inspection to determine whether or not modification of a communication, in particular redirection, is required.

Hence, the gateway may analyze IP packets by some sort of TCP flow tracking to determine whether or not an IP packet arriving at the gateway (from, e.g., a client) tries to access a service that matches a "denied rule". Such "denied rule" may be locally available at the gateway or it may be accessible to the gateway to find out whether a particular access service matches a denied criteria. In such case, the gateway could start dropping IP packets that fall under such "denied rule" or it may initiate redirection or it may initiate a reset of a TCP connection between the first network component and the second network component.

According to the invention, the gateway performs layer-4 processing, in particular without using TCP level processing. In particular, the packets are inspected on layer-4 and also the TCP level payload can be read to obtain the payload data on HTTP level (e.g., HTTP methods and headers).

Hence, no resource demanding layer-7 processing is required at the gateway. The suggested layer-4 processing can be conducted, e.g., by a kernel of the gateway, which leads to a much faster overall performance handling messages at the gateway.

According to just another embodiment, the gateway modifies the communication if a request from the second network component to the first network component is directed to a denied service.

Redirection may in particular be required in case a prepaid user runs out of memory and the access needs to be redirected to a self-service portal that allows the user to use a credit card. Redirection may also become necessary if access is not allowed to a specific URL (service) and the operator wants to inform the client as why the service is not allowed (wrong time or wrong profile). In addition, redirection may be necessary if the service is denied temporarily, e.g., for maintenance needs. In addition, the service may have been moved to another server, which can be indicated to the client. Furthermore, a welcome page needed for the first service usage action can be provided by redirection means.

It is also an embodiment that the gateway initiates redirection and/or the gateway starts dropping data directed towards the first network component.

In an embodiment, the change of the service is indicated by conveying redirection information to access the service via a third network component.

Said redirection information may be a change of an address (e.g., URL) that can be utilized by a client (e.g., the second network component) to access the required data or information via a different network component (another server than the server previously addressed).

In another embodiment, the first network component is a first server, the second network component is a client and the third network component is a second server.

Other than that, the first, second and third network components can be any kind of components distributed throughout the network. Any of the network components may be a user's device or client or a server, e.g., operated by a service provider.

In a further embodiment, said communication from the first network component comprises a "Not found" message or an "OK message", optionally comprising the redirection information to access the service via said third network component.

In a next embodiment, the solution provided comprises the step:
(a2) the second network component accesses the third network component utilizing said redirection information.

Such access may be processed via said gateway. Hence, the client device may get access to the information required via said third network component (e.g., additional server).

It is also an embodiment that the network comprises the Internet or is associated with the Internet.

Pursuant to another embodiment, said service comprises at least one of the following:
- a service provided by the network being addressable in the network;
- a site or a page of the network;
- a content of the network;
- an URL.

According to the invention, the solution comprises the following step prior to step (a1):
(a0) the gateway receives a request for the service from the second network component and changes this request into a message to be conveyed to the first network component, pursuant to which the first network component provides a response without a message body.

Such a message to be conveyed to the first network component may be a HEAD-message indicating that the first network component (server) must not return a message body in a response message. Only the HTTP headers are provided in such response and further conveyed to the second network component (the client), comprising e.g., a content-type, a content-size, a date.

For example, the first network component may just return a "method not allowed" or a "200 OK" message.

The response from the first network component can be modified by the gateway, e.g., by providing a service or a service-relevant information.

According to another embodiment, the gateway receives a message without a message body from the first network component in return to the HEAD-message.

In yet another embodiment, the solution provided comprises the following step prior to step (a1):
(a0) the gateway receives a request for the service from the second network component and changes this request into a GET-message, a PUT-message or a POST-message to be conveyed to the first network component.

According to a next embodiment, the gateway receives a "200 OK" message in return to the GET, PUT- or POST-message in particular indicating the change of the service within a message body.

The problem stated above is also solved by a device comprising a and/or being associated with a processor unit and/or a hard-wired circuit and/or a logic device that is arranged such that the method as described herein is executable thereon.

According to an embodiment, the device is a or is associated with a communication device, in particular a network component, a gateway, a server or a client device.

The problem stated supra is further solved by a communication system comprising the device as described herein.

Embodiments of the invention are shown and illustrated in the following figures:
- Fig.1: shows an exemplary message sequence chart between a client, a gateway, a Server1 and a Server2, wherein a reason of a service change or a change of service, in particular a redirection information, is conveyed to the client device;
- Fig.2: shows an alternative message sequence chart between a client, a gateway, a Server1 and a Server2, wherein a reason of a service change or a change of service, in particular a redirection information, is conveyed to the client device;
- Fig.3: shows a message sequence chart based on Fig.1 in more detail.

The approach provided herein in particular enables an HTTP redirection transparently processed in an IP gateway that is analyzing the IP traffic, e.g., on layer-4 (L4).

For example, in case of a proxy mode deep packet inspection (DPI), TCP sessions are terminated in a gateway node so that a user space (on layer-7 (L7)) application in the gateway is able to process the HTTP requests and inspect the payload data. If the HTTP request is allowed to its final destination, the gateway will make the connection towards the destination server and it will send the original request to such destination server. If a response arrives from the server, the gateway sends the response to the client using the existing connection. In this kind of communication, if the access needs to be redirected, the gateway does not need to connect to the destination server at all. Instead, the gateway may immediately after having received the HTTP request from the client send the redirection response back to the client. However, such kind of direct processing bears the disadvantage of the proxy mode gateway requiring a lot of processing capacity, because the TCP session terminates at the gateway and it is processed by the gateway's user space application on L7 (i.e. L7 is required at such gateway). Hence, a TCP handshake is being processed between the client and gateway and also between the gateway and the server. So each connection from the client is processed locally in the gateway user space, which results in heavy operation (compared to mere L4 level processing).

For example, the network gateway being able to route IP packets in kernel level (L4) up to 1GBits/s may only process about 100MBit/s in user space (L7). TCP stream processing in application space requires IP packet reassembly, handling of the TCP window, sequence number processing, retransmissions, etc., which results in a lot of processing capacity all done by said gateway.

The approach provided herein allows for a gateway to operate, e.g., in a kernel mode DPI on layer-4 (L4). Such kernel mode DPI gateway may advantageously investigate IP packets having some sort of TCP flow tracking (e.g., state full inspection). The purpose of this kind of flow tracking may comprise denying service access that matches a so-called 'deny' rule. Hence, if the client connects to the HTTP service the TCP session is established between the client and the server (TCP handshake between the client and server). The DPI gateway located in the path between the client and the server may inspect, route and forward the IP packets. If the HTTP request arriving at the gateway does have the service access to a denied service, the gateway will start dropping the IP packets or it will send the TCP reset to the client and to the server for terminating the TCP session.

Hence, the approach described herein allows making a redirection in the kernel space (L4 of the gateway) without using TCP level processing. By providing redirection as described herein, the DPI gateway does not have to break the TCP connection between the server and client.

It is however noted, that prior to the client being able to send the request to the server via the gateway providing DPI services, the connection may have to be established, e.g., via TCP handshake. Hence, when the client sends the packet containing an HTTP request in a TCP payload which does match the deny/redirect rule, the gateway performs DPI and is thus able to provide redirection as described herein. If TCP retransmission is required, the server will be able to handle it - the DPI gateway may only rewrite the data as described herein.

### An example could be summarized as follows:

In case redirection is done, the format of the headers may be as follows:
The client sends:
   GET /someurl HTTP/1.1
   Host: www.server1.com
   Accept: */*
   Connection: keep-alive
The server responds with:
   HTTP/1.1 302 Moved
   Location: http://www.server2.com/deny
   Content-length: 0
   Connection: close
Based on the server's response, the client can launch a new request:
   GET /deny HTTP/1.1
   Host: www.server2.com
   Accept: */*
   Connection: keep-alive

Also, a response code 301 may be applicable for most web browsers. Accordingly, the following redirection response from the server may work in a similar manner:
HTTP/1.1 301 Moved
Location: http://www.server2.com/deny
Content-length: 0
Connection: close

Hence, the IP gateway may modify an HTTP URL received via an IP packet to point to a nonexistent URL. The destination server may return an HTTP response "404 Not found".

Such response is received at the IP gateway, which modifies it into a "302 Moved" message. In addition, the IP gateway modifies HTTP response headers to carry a 'Location' header comprising the redirection URL. After such changes, the TCP CRC is recalculated and the IP packet is sent to the HTTP client.

Hence, the client is able to send a HTTP GET request to another server utilizing the redirection URL conveyed by the IP gateway.

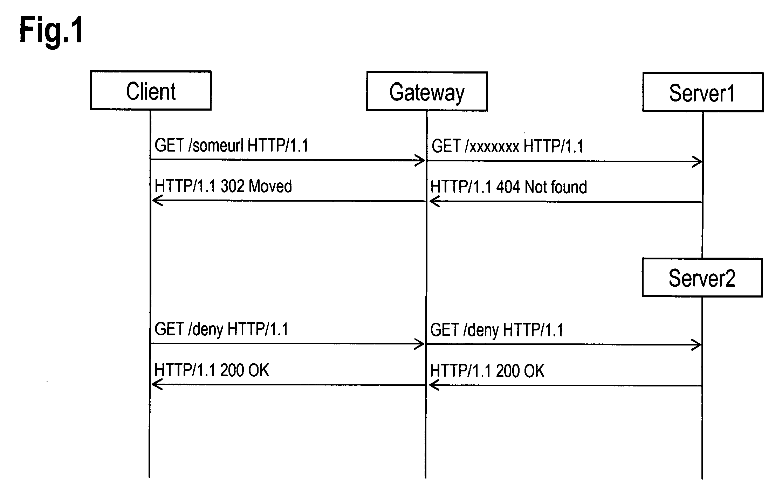

**Fig.1** shows an exemplary message sequence chart between a client, a gateway, a Server1 and a Server2.

The messages exchanged can be describes as follows:
(1) A connection between the client and the Server1 is established via the gateway. After a TCP three way handshake, the client sends a HTTP request comprising in particular
   GET /someurl HTTP/1.1
   Host: www.server1.com
   Accept: */*
   Connection: keep-alive
   to the gateway. The gateway analyzes the incoming HTTP request, e.g., utilizing DPI to find out whether or not it matches the deny/redirect rule. In the affirmative, the gateway performs DPI and is thus able to provide redirection. If TCP retransmission is required, the server will be able to handle it - the DPI gateway just needs to rewrite the data. The gateway changes the destination URL, e.g., such that an TCP packet sequence number is not changed and forwards a message
   GET /xxxxxxx HTTP/1.1
   Host: www.server1.com
   Accept: */*
   Connection: keep-alive
   to the Server1.
(2) Because the destination URL "/xxxxxxx" does not exist, the Server1 responds with a HTTP response
   HTTP/1.1 404 Not found.
   Content-length: 250
   Connection: keep-alive
   The response code from the Server1 may also comprise or be "302". Some HTTP services provide a missing service notification by redirecting the access to an own service from where the status can be retrieved.
   The gateway modifies this response into
   HTTP/1.1 302 Moved
   Location: http://www.server2.com/deny
   Content-length: 0
   Connection: close
   and replaces the HTTP headers to comprise a location information of a redirect URL ".../deny". For example, a information "http://www.server2.com/deny" could be provided to indicate that the content can be found via a redirection information "http://www.server2.com".
   Such modified data packet is forwarded from the gateway to the client.
(3) The client closes the existing TCP connection to the Server1 and establishes a new connection to the Server2. Furthermore, the client uses the redirect URL ".../deny" via a GET request
   GET ".../deny" HTTP/1.1.
   Host: www.server2.com
   Accept: */*
   Connection: keep-alive
   The gateway forwards this request directly to the Server2.
(4) The Server2 responds with a message
   HTTP/1.1 200 OK
   Content-length: 500
   Connection: keep-alive
   <html><p>Your service is denied ...</html>
   and conveys the data requested to the client via the gateway. Said gateway just forwards the data to the client.

It is noted that the ".../deny" expression can have different meaning. For example, a client may be configured to use a HTTP proxy, i.e. the client is connected via the gateway and further via said HTTP proxy to the Server2 (e.g., "www.server2.com"):
GET http://www.server2.com/deny HTTP/1.1.
Host: www.server2.com
Accept: */*
Connection: keep-alive

As an alternative, the client may not use such HTTP proxy, but have a direct connection to the destination (e.g., to Server2) via said gateway:
GET /deny HTTP/1.1.
Host: www.server2.com
Accept: */*
Connection: keep-alive

Both such formats may be adapted by changing the method line path accordingly. The location header may be the same for both, the direct mode and the proxy mode server redirection response (location according to the example:
http://www.server2.com/deny.

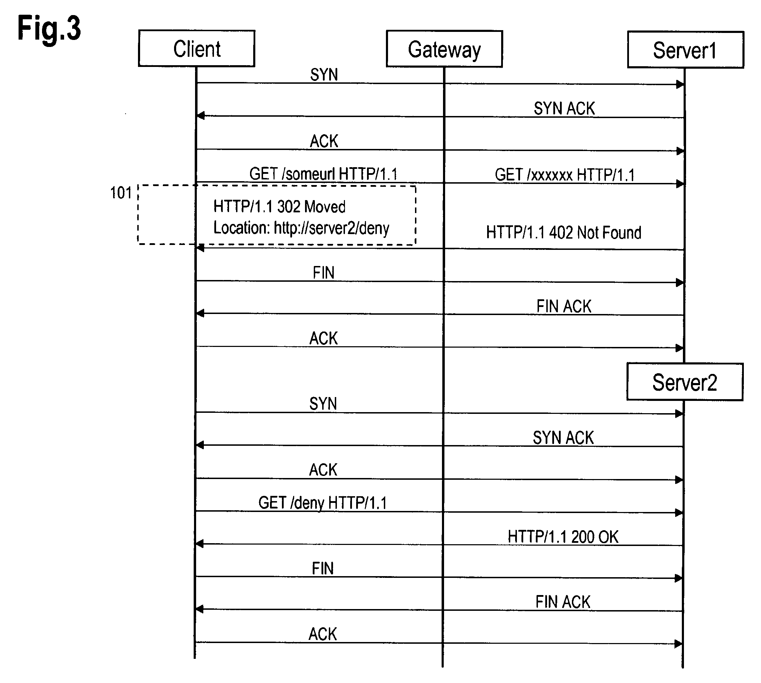

**Fig.3** shows a message sequence chart based on Fig.1 in more detail. Hence, TCP message flags SYN, SYN ACK, ACK, FIN, FIN ACK are shown indicating synchronization (SYN), acknowledgement (ACK) and an end of a connection (FIN).

A first connection is established between the client and the Server1 and a second connection is established between the client and the Server2 after the redirection response 101 has been provided to the client.

Hence, the redirection can be provided, e.g., by the kernel of the gateway without using any TCP level processing. This enables redirection without the gateway having to break up the TCP connection between the Server1 and the client.

It is noted that before the client is able to send a request to the Server1 via said DPI gateway, the connection needs to be established, i.e. via TCP handshake, comprising SYN, SYN ACK and ACK messages.

When the client sends a packet containing the HTTP request in TCP payload, which does match the deny/redirect rule, the DPI gateway is able to do the redirection as described. If the TCP retransmission is required due to such matching entry regarding said deny/redirect rule, the Server1 may handle it and the DPI gateway may just rewrite the data to be forwarded. Redirection status codes as indicated, e.g., 301 or 302, may both work for most web clients.

### Alternative Embodiment

As an alternative, the approach provided herein enables HTTP redirection transparently in the IP gateway that is analyzing the IP traffic by modifying the accessed HTTP method "HEAD" instead of methods "GET", "PUT" or "POST" so that the destination server may return a HTTP response "200 OK" or any other valid HTTP response.

Such response, received by the IP gateway, is modified into a "302 Moved" message. In addition, the IP gateway also modifies the HTTP response headers to carry a 'Location' header having the redirection URL. After such changes, the TCP CRC is recalculated and the IP packet is sent to the HTTP client.

Hence, the client is able to send an HTTP GET request to another server utilizing the redirection URL conveyed by the IP gateway.

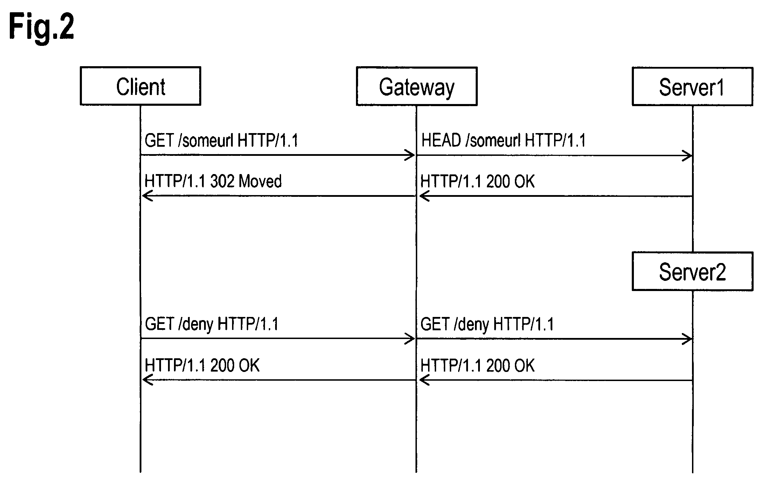

**Fig.2** shows a different embodiment visualized by a message sequence chart comprising a client, a gateway, a Server1 and a Server2.

The messages exchanged can be describes as follows:
(1) A connection between the client and the Server1 is established via the gateway. After a TCP three way handshake, the client sends a HTTP request
   GET /someurl HTTP/1.1
   Host: www.server1.com
   Accept: */*
   Connection: keep-alive
   to the gateway. The gateway analyzes the incoming HTTP request and the gateway knows that the service accessed would be denied and that redirection is needed. The gateway changes the HTTP method to a "HEAD" message such that a TCP packet sequence number is not changed and forwards a message
   HEAD /someurl HTTP/1.1
   Host: www.server1.com
   Accept: */*
   Connection: keep-alive
   to the Server1.
(2) The HEAD message is similar to the GET message except that the server's response does not provide a message-body.
   The server responds with HTTP response
   HTTP/1.1 200 OK
   Content-length: 0
   Content-type: text/html
   Server: Apache/1.3
   Last-Modified: Sat, 29 Oct 2007 19:43:31 GMT
   Connection: keep-alive
   The gateway modifies this response into
   HTTP/1.1 302 Moved
   Location: http://www.server2.com/deny
   Content-length: 0
   Connection: close
   and replaces the HTTP headers to comprise a location information of a redirect URL ".../deny". Such modified data packet is forwarded from the gateway to the client.
(3) The client closes the existing TCP connection to the Server1 and establishes a new connection to the Server2. Furthermore, the client uses the redirect URL ".../deny" via a GET request
   GET ".../deny" HTTP/1.1
   Host: www.server2.com
   Accept: */*
   Connection: keep-alive
   The gateway forwards this request directly to the Server2.
(4) The Server2 responds with a message
   HTTP/1.1 200 OK
   Content-length: 500
   Connection: keep-alive
   <html><p>Your service is denied ...</html>
   and conveys the data requested to the client via the gateway. Said gateway just forwards the data to the client.

It is noted that the ".../deny" expression can have different meaning as explained with regard to the example above. Hence, a client may be configured to use a HTTP proxy or it may utilize a direct connection.

### Further Advantages:

Hence, pursuant to the approach provided herein, TCP level packet retransmission is handled by the client and by the server, wherein the gateway does not have to modify any TCP sequence and/or acknowledge numbers. In particular, the gateway does not have to buffer IP packets which have not yet been acknowledged either by the client or by the server.

Usually the "404 Not found" response provided by the Server1 may not comprise any payload data to be sent to the client. However, the space in the IP packet that could otherwise be used for payload data could be utilized by conveying a redirection URL, in particular with additional data.

Also, HTTP servers and/or clients may send other HTTP headers 'Server' and 'Content-Type' which can be replaced to contain a redirection header with additional data. If IP packet retransmission occurs, the gateway needs only to rewrite the IP packet as it has done previously. The TCP/IP session information and/or termination are handled by the original client and by the server. The IP gateway may in particular only forward the TCP/IP signaling packets.

This is of advantage as this approach does not require the IP gateway to terminate all HTTP sessions transparently within its own TCP/IP stack or a partial implementation thereof.

## Claims

1. A method for processing data in a network, wherein a gateway performs deep packet inspection to determine whether or not modification of a communication is required, and the gateway processes the contents of the layer-4 payload without using TCP level processing, the method comprising the following steps:
the gateway receives a request for a service from a second network component and changes this request into a message to be conveyed to a first network component such that a TCP packet sequence number is not changed,
the gateway modifies a response received from the first network component by indicating a reason for a service change and/or by indicating a change of the service and conveys the response to the second network component.

2. The method according to claim 1, wherein the first network component provides a response without a message body.

3. The method according to any of claims 1 or 2, wherein the gateway modifies the communication if a request from the second network component to the first network component is directed to a denied service.

4. The method according to claim 3, wherein the gateway initiates redirection and/or the gateway starts dropping data directed towards the first network component.

5. The method according to any of the preceding claims, wherein the change of the service is indicated by conveying redirection information to access the service via a third network component.

6. The method according to claim 5, wherein the first network component is a first server, the second network component is a client and the third network component is a second server.

7. The method according to any of claims 5 or 6, wherein said response from the first network component comprises a "Not found" message or an "OK message", optionally comprising the redirection information to access the service via said third network component.

8. The method according to any of the claims 5, 6 or 7, comprising the step:
the second network component accesses the third network component utilizing said redirection information.

9. The method according to any of the preceding claims, wherein the network comprises the Internet or is associated with the Internet.

10. The method according to any of the preceding claims, wherein said service comprises at least one of the following:
- a service provided by the network being addressable in the network;
- a site or a page of the network;
- a content of the network;
- an URL.

11. The method according to claim 1, wherein the message to be conveyed to the first network component is either a GET-message, a PUT-message, a POST-message, or a HEAD message.

12. A device comprising means and being arranged in such a way that the role of the gateway in a method according to any of the preceding claims is executable thereon.

13. The device according to claim 12, wherein the means comprise or are associated with any of
- a processor unit,
- a hard-wired circuit,
- a logic device.

14. Communication system comprising a device according to any of claims 12 or 13.

## Patentansprüche

1. Ein Verfahren zur Verarbeitung von Daten in einem Netzwerk, wobei ein Gateway eine Deep Packet Inspection durchführt, um festzustellen, ob eine Meldung verändert werden muss oder nicht, und das Gateway den Inhalt der Nutzdaten auf der Schicht 4 ohne Eingriff in die TCP-Prozesse verarbeitet, wobei das Verfahren folgende Schritte umfasst:
das Gateway empfängt eine Anforderung eines Dienstes von einer zweiten Netzwerkkomponente und ändert diese Anforderung in eine zu einer ersten Netzwerkkomponente zu übermittelnde Nachricht in einer Weise ab, dass eine TCP-Paketfolgenummer nicht geändert wird,
das Gateway ändert eine von der ersten Netzwerkkomponente empfangene Antwort durch Anzeigen eines Grundes für eine Dienständerung und/oder durch Anzeigen einer Änderung des Dienstes ab und übermittelt die Antwort an die zweite Netzwerkkomponente.

2. Das Verfahren nach Anspruch 1, wobei die erste Netzwerkkomponente eine Antwortnachricht ohne einen Nachrichtenkörper bereitstellt.

3. Das Verfahren nach einem der Ansprüche 1 oder 2, wobei das Gateway die Meldung dann abändert, wenn eine Anforderung von der zweiten Netzwerkkomponente zur ersten Netzwerkkomponente auf einen verweigerten Dienst gerichtet ist.

4. Das Verfahren nach Anspruch 3, wobei das Gateway für Daten, die an die erste Netzwerkkomponente gerichtet sind, eine Umlenkung einleitet und/oder beginnt, sie abzuwerfen.

5. Das Verfahren nach einem der vorhergehenden Ansprüche, wobei die Änderung des Dienstes durch Übermitteln von Umlenkungsinformation zum Zugreifen auf den Dienst über eine dritte Netzwerkkomponente angezeigt wird.

6. Das Verfahren nach Anspruch 5, wobei die erste Netzwerkkomponente ein erster Server ist, die zweite Netzwerkkomponente ein Client ist und die dritte Netzwerkkomponente ein zweiter Server ist.

7. Das Verfahren nach einem der Ansprüche 5 oder 6, wobei die Antwort von der ersten Netzwerkkomponente eine Nachricht "Nicht gefunden" oder eine Nachricht "OK" umfasst, die optional die Umlenkungsinformation zum Zugreifen auf den Dienst über die dritte Netzwerkkomponente beinhaltet.

8. Das Verfahren nach einem der Ansprüche 5, 6 oder 7, umfassend den Schritt:
die zweite Netzwerkkomponente greift auf die dritte Netzwerkkomponente unter Verwendung der Umlenkungsinformation zu.

9. Das Verfahren nach einem der vorhergehenden Ansprüche, wobei das Netzwerk das Internet umfasst oder mit dem Internet in Verbindung steht.

10. Das Verfahren nach einem der vorhergehenden Ansprüche, wobei der Dienst mindestens eines der Folgenden umfasst:
- einen durch das Netzwerk bereitgestellten Dienst, der im Netzwerk adressierbar ist;
- einen Ort oder eine Seite im Netzwerk;
- einen Inhalt im Netzwerk;
- eine URL-Adresse.

11. Das Verfahren nach Anspruch 1, wobei die zur ersten Netzwerkkomponente zu übermittelnde Nachricht entweder eine GET-Nachricht, eine PUT-Nachricht, eine POST-Nachricht oder eine HEAD-Nachricht ist.

12. Eine Vorrichtung, umfassend Mittel und eingerichtet auf solche Weise, dass die Rolle des Gateways in einem Verfahren gemäß einem beliebigen der vorhergehenden Ansprüche damit ausführbar ist.

13. Die Vorrichtung nach Anspruch 12, wobei die Mittel irgendeines der Folgenden umfassen oder damit verbunden sind:
- eine Prozessoreinheit,
- eine fest verdrahteten Schaltung,
- einen Logikbaustein.

14. Ein Kommunikationssystem, umfassend eine Vorrichtung gemäß einem der Ansprüche 12 oder 13.

## Revendications

1. Un procédé de traitement de données dans un réseau, dans lequel une passerelle exécute une inspection détaillée des paquets de façon à déterminer si ou non une modification d'une communication est nécessaire, et la passerelle traite les contenus des données utiles de couche 4 sans utiliser un traitement de niveau TCP, le procédé comprenant les opérations suivantes :
la passerelle reçoit une demande pour un service provenant d'un deuxième composant de réseau et
transforme cette demande en un message à acheminer à un premier composant de réseau de sorte qu'un numéro de séquence de paquet TCP ne soit pas modifié,
la passerelle modifie une réponse reçue du premier composant de réseau en indiquant une raison pour un changement de service et/ou en indiquant un changement du service et achemine la réponse au deuxième composant de réseau.

2. Le procédé selon la revendication 1, dans lequel le premier composant de réseau fournit une réponse sans corps de message.

3. Le procédé selon l'une quelconque des revendications 1 ou 2, dans lequel la passerelle modifie la communication si une demande du deuxième composant de réseau au premier composant de réseau est acheminée vers un service refusé.

4. Le procédé selon la revendication 3, dans lequel la passerelle lance le réacheminement et/ou la passerelle commence à rejeter des données acheminées vers le premier composant de réseau.

5. Le procédé selon l'une quelconque des revendications précédentes dans lequel le changement du service est indiqué par l'acheminement d'informations de réacheminement destinées à accéder au service par l'intermédiaire d'un troisième composant de réseau.

6. Le procédé selon la revendication 5, dans lequel le premier composant de réseau est un premier serveur, le deuxième composant de réseau est un client et le troisième composant de réseau est un deuxième serveur.

7. Le procédé selon l'une quelconque des revendications 5 ou 6, dans lequel ladite réponse du premier composant de réseau comprend un message "Non trouvé" ou un message "OK" contenant éventuellement les informations de réacheminement destinées à accéder au service par l'intermédiaire dudit troisième composant de réseau.

8. Le procédé selon l'une quelconque des revendications 5, 6 ou 7, comprenant l'opération suivante :
le deuxième composant de réseau accède au troisième composant de réseau au moyen desdites informations de réacheminement.

9. Le procédé selon l'une quelconque des revendications précédentes, dans lequel le réseau comprend l'Internet ou est associé à l'Internet.

10. Le procédé selon l'une quelconque des revendications précédentes, dans lequel ledit service comprend au moins un des éléments suivants :
- un service fourni par le réseau qui est adressable dans le réseau,
- un site ou une page du réseau,
- un contenu du réseau,
- une URL.

11. Le procédé selon la revendication 1, dans lequel le message à acheminer au premier composant de réseau est soit un message GET, un message PUT, un message POST ou un message HEAD.

12. Un dispositif comprenant un moyen et étant agencé de sorte que le rôle de la passerelle dans un procédé selon l'une quelconque des revendications précédentes soit exécutable sur celui-ci.

13. Le dispositif selon la revendication 12, dans lequel le moyen comprend ou est associé à l'un quelconque parmi
- une unité de processeur,
- un circuit câblé,
- un dispositif logique.

14. Un système de communication comprenant un dispositif selon l'une quelconque des revendications 12 ou 13.
